(19)

(11) EP 3 985 388 A1

(12) EUROPEAN PATENT APPLICATION
published in accordance with Art. 153(4) EPC

(43) Date of publication:
**20.04.2022 Bulletin 2022/16**

(21) Application number: **19932974.9**

(22) Date of filing: **13.06.2019**

(51) International Patent Classification (IPC):
***G01N 29/50*** *(2006.01)*

(52) Cooperative Patent Classification (CPC):
**G01N 29/48; G01N 29/043; G01N 29/069; G01N 29/11; G01N 29/225; G01N 29/275; G01N 29/50;** G01N 2291/0234

(86) International application number:
**PCT/JP2019/023486**

(87) International publication number:
**WO 2020/250379 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **JFE Steel Corporation**
**Tokyo 100-0011 (JP)**

(72) Inventors:
- **TERADA, Kazuki**
**Tokyo 100-0011 (JP)**
- **MATSUI, Yutaka**
**Tokyo 100-0011 (JP)**
- **OHTANI, Yoshinori**
**Tokyo 100-0011 (JP)**
- **MATSUMOTO, Minoru**
**Tokyo 100-0011 (JP)**

(74) Representative: **Grünecker Patent- und Rechtsanwälte PartG mbB**
**Leopoldstraße 4**
**80802 München (DE)**

# (54) ULTRASOUND FLAW DETECTION METHOD, ULTRASOUND FLAW DETECTION DEVICE, MANUFACTURING EQUIPMENT LINE FOR STEEL MATERIAL, MANUFACTURING METHOD FOR STEEL MATERIAL, AND QUALITY ASSURANCE METHOD FOR STEEL MATERIAL

(57) An ultrasonic flaw detection method according to the present invention includes a receiving step of receiving a plurality of flaw signals via one or more vibration elements provided in an ultrasonic probe, while changing a positional relation between an inspection material and the ultrasonic probe; a determining step of calculating a ratio of a received sound pressure at each vibration element position with respect to a received sound pressure at a vibration element position where a received sound pressure from a flaw is maximized as a received sound pressure ratio, in each positional relation between the inspection material and the vibration element, and determining a combined waveform group in an aperture synthesis process at each vibration element position of the inspection material based on the calculated received sound pressure ratio; and an inspecting step of inspecting the inside of the inspection material by executing the aperture synthesis process on a received waveform obtained through multiple transmissions and receptions, using the combined waveform group determined at the step of determining, and delay time of the flaw signals.

FIG.1

15
16
17
20
PULSER
RECEIVER
A/D CONVERTER
DISPLAY DEVICE
18
19
RECORDING DEVICE
SIGNAL PROCESSING DEVICE
13
12
111
11
RB
14
14

EP 3 985 388 A1

**Description**

Field

The present invention relates to an ultrasonic flaw detection method, an ultrasonic flaw detection device, a manufacturing equipment line for a steel material, a manufacturing method for a steel material, and a quality assurance method for a steel material.

Background

An internal flaw of a round bar may become a starting point of a crack when a machine part made from the round bar is to be manufactured, and reduces the strength and life of the machine part after being manufactured. Thus, conventionally, ultrasonic flaw detection is performed on the round bar, and the internal flaw of the round bar has been evaluated. In the conventional ultrasonic flaw detection device for a round bar, flaw detection is performed on the entire surface of the round bar, by relatively moving a single perpendicular and oblique array probe along the circumference direction and the axis direction of the round bar, or moving a pair of round bars in the axis direction by arranging a plurality of array probes in the circumferential direction.

Patent Literature 1 discloses a method for improving the detection capability and resolution capability of a flaw using a small diameter ultrasonic probe by receiving a flaw signal while scanning the ultrasonic probe and performing an aperture synthesis process on a plurality of the received flaw signals, while setting a delay time according to the received position of the flaw signals.

On the other hand, when an array probe is used, it is possible to improve the flaw detection capability by controlling the timing at which a plurality of vibration elements are excited, and changing the depth and direction at which the ultrasonic beam is focused. However, to perform flaw detection by setting a plurality of focal positions, the vibration elements must be excited multiple times, and it takes time to detect a flaw on the entire cross section. From such circumstances, Patent Literature 2 discloses a method of focusing an ultrasonic beam in the circumferential direction and detecting a flaw at a high speed, by simultaneously exciting the vibration elements, and by adding a delay time to the signals received by the vibration elements and combining the received signals on a computer.

Citation List

Patent Literature

Patent Literature 1: Japanese Patent Application Laid-open No. 2005-233874
Patent Literature 2: Japanese Patent Application Laid-open No. 2013-156277

Summary

Technical Problem

However, in the method disclosed in Patent Literature 1, although high detection capability can be obtained uniformly in the moving direction by the effect of aperture synthesis, when an unfocused probe is used, the detection capability is reduced in the direction toward which the probes are arranged. When a focused probe is used, the beam is focused on the center axis of the probe, and the detection capability is reduced between the probes. For example, there is a method of arranging the probes in a zigzag manner. However, if a local water immersion method is used, more areas must be coupled, and bubbles are more easily mixed.

Moreover, in the method disclosed in Patent Literature 2, a focal point is scanned in the circumferential direction on a computer. Thus, when a vibration element that focuses the beam in the axis direction is used to obtain high and uniform detection capability in the axis direction of the round bar, flaw detection must be carried out at a fine pitch. Hence, it takes time to detect a flaw on the entire cross section.

The present invention has been made in view of the above problems, and an object of the present invention is to provide an ultrasonic flaw detection method and an ultrasonic flaw detection device that can execute ultrasonic flaw detection with high detection capability and resolution capability at a high speed, in every area in an inspection material. Moreover, another object of the present invention is to provide a manufacturing equipment line for a steel material and a manufacturing method for a steel material that can manufacture a steel material with a good yield. Furthermore, another object of the present invention is to provide a quality assurance method for a steel material that can provide a high quality steel material

Solution to Problem

To solve the above-described problem and achieve the object, an ultrasonic flaw detection method for inspecting an inside of an inspection material according to the present invention includes: transmitting an ultrasonic signal from an ultrasonic probe to the inspection material; receiving the ultrasonic signal reflected inside the inspection material via the ultrasonic probe as a flaw signal; a receiving step of receiving a plurality of the flaw signals via one or more vibration elements provided in the ultrasonic probe, while changing a positional relation between the inspection material and the ultrasonic probe; a determining step of calculating a ratio of a received sound pressure at each vibration element position with respect to a received sound pressure at a vibration element position where a received sound pressure from a flaw is maximized as a received sound pressure ratio in each positional relation between the inspection material and the vibration element, and determining a combined waveform group in an aperture synthesis process at each vibration element position of the inspection material based on the calculated received sound pressure ratio; and an inspecting step of inspecting the inside of the inspection material by executing the aperture synthesis process on a received waveform at the vibration element obtained through multiple transmissions and receptions, using the combined waveform group determined at the step of determining, and delay time of the flaw signals.

Moreover, in the above-described ultrasonic flaw detection method according to the present invention, the determining step includes a step of calculating an S/N ratio change rate of a flaw signal by adding and averaging the received sound pressure ratio at each vibration element position, and determining a combined waveform group that makes the S/N ratio change rate be a predetermined value or more, as a flaw signal waveform used in the aperture synthesis process.

Moreover, in the above-described ultrasonic flaw detection method according to the present invention, the determining step includes a step of calculating the received sound pressure ratio based on directional angles each of which is an angle between a center axis of the vibration element and an ultrasonic propagation path in each of two cross sections orthogonal to each other, for the vibration element, and calculating a received sound pressure ratio by using two of the calculated received sound pressure ratios.

Moreover, in the above-described ultrasonic flaw detection method according to the present invention, the determining step includes a step of determining the delay time in ultrasonic propagation paths, by calculating an ultrasonic propagation path and an incident point that satisfy Snell's law on one cross section, for the vibration element, and by calculating a position of the incident point and an ultrasonic propagation path that satisfies Snell's law on a surface that is orthogonal to the cross section.

Moreover, in the above-described ultrasonic flaw detection method according to the present invention, the determining step includes a step of calculating received sound pressure ratios R1 and R2 using directional angles $\psi 1$ and $\psi 2$ of an ultrasonic signal on two cross sections orthogonal to each other, using following expression (1), expression (2), and expression (3), when the vibration element is formed in a rectangular shape, where a parameter m in the following expression (3) is a coefficient determined by the directional angles $\psi 1$ and $\psi 2$ and a width of the vibration element:

$$R1 = Dc(\varphi 1) \qquad (1)$$

$$R2 = Dc(\varphi 2) \qquad (2)$$

$$Dc(\varphi) = \frac{\sin m}{m} \qquad (3).$$

To solve the above-described problem and achieve the object, an ultrasonic flaw detection device according to the present invention inspects an inside of an inspection material by transmitting an ultrasonic signal from an ultrasonic probe to the inspection material, and by receiving the ultrasonic signal reflected inside the inspection material via the ultrasonic probe as a flaw signal, and includes: a reception unit configured to receive a plurality of the flaw signals via one or more vibration elements provided in the ultrasonic probe, while changing a positional relation between the inspection material and the ultrasonic probe; a determination unit configured to calculate a ratio of a received sound pressure at each vibration element position with respect to a received sound pressure at a vibration element position where a received sound pressure from a flaw is maximized as a received sound pressure ratio in each positional relation between the inspection material and the vibration element, and determine a combined waveform group in an aperture synthesis process at each vibration element position of the inspection material based on the calculated received sound pressure ratio; and an inspection unit configured to inspect the inside of the inspection material by executing the aperture synthesis process on a received waveform at the vibration element obtained through multiple transmissions and receptions, using the combined waveform group determined by the determination unit, and delay time of the flaw signals.

To solve the above-described problem and achieve the object, a manufacturing equipment line for a steel material according to the present invention includes: a manufacturing device configured to manufacture a steel material; and the ultrasonic flaw detection device according to the present invention configured to inspect the inside of the steel material manufactured by the manufacturing device.

To solve the above-described problem and achieve the object, a manufacturing method for a steel material according to the present invention includes: a manufacturing step of manufacturing a steel material; and a detecting step of detecting a flaw inside the steel material manufactured at the manufacturing step, using the ultrasonic flaw detection method according to the present invention.

To solve the above-described problem and achieve the object, a quality assurance method for a steel material according to the present invention includes: a detecting step of detecting a flaw inside a steel material, using the ultrasonic flaw detection method according to the present invention; and a quality assuring step of quality assuring the steel material from a flaw detection result obtained at the detecting step.

Advantageous Effects of Invention

With the ultrasonic flaw detection method and the ultrasonic flaw detection device according to the present invention, it is possible to execute ultrasonic flaw detection with high detection capability and resolution capability at a high speed in every area in an inspection material, by performing aperture synthesis on a signal received by one or more vibration elements provided in an ultrasonic probe. Moreover, with the manufacturing equipment line for a steel material and the manufacturing method for a steel material according to the present invention, it is possible to manufacture a steel material with a good yield. Furthermore, with the quality assurance method for a steel material according to the present invention, it is possible to provide a high quality steel material.

Brief Description of Drawings

FIG. 1 is a schematic diagram illustrating a configuration of an ultrasonic flaw detection device, which is an embodiment of the present invention.

FIG. 2 is a flowchart illustrating a flow of determining aperture synthesis process conditions, which is the embodiment of the present invention.

FIG. 3 is a schematic diagram for explaining an outline of a propagation path calculation process, which is the embodiment of the present invention.

FIG. 4 is a schematic diagram for explaining a configuration of an array probe in the propagation path calculation process, which is the embodiment of the present invention.

FIG. 5 is a schematic diagram for explaining a propagation path calculation process and a delay time calculation process on a cross section of a round bar in a circumferential direction, which is the embodiment of the present invention.

FIG. 6 is a schematic diagram for explaining the propagation path calculation process and the delay time calculation process on a cross section of a round bar in an axis direction, which is the embodiment of the present invention.

FIG. 7 is a schematic diagram for explaining a received sound pressure ratio calculation process and an optimal combined width calculation process on the cross section of the round bar in the circumferential direction, which is the embodiment of the present invention.

FIG. 8 is a schematic diagram for explaining the received sound pressure ratio calculation process and the optimal combined width calculation process on the cross section of the round bar in the axis direction, which is the embodiment of the present invention.

FIG. 9 is a diagram illustrating the results of simulating a relation between the number of combined waveforms and the S/N ratio change rate when the signal processing of the present invention is performed.

FIG. 10 is a diagram illustrating the results of simulating a relation between the number of combined waveforms and the S/N ratio change rate when the signal processing of the conventional method is performed. Description of Embodiment

Hereinafter, a configuration and an operation of an ultrasonic flaw detection device, which is an embodiment of the present invention will be described in detail with reference to the accompanying drawings.

Ultrasonic Flaw Detection Device

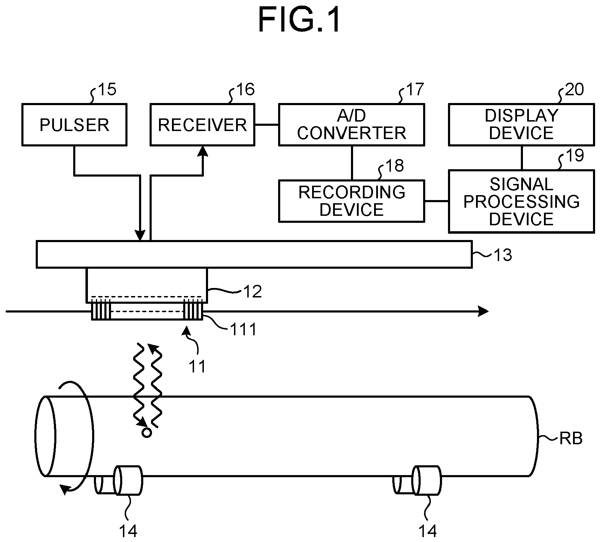

A configuration of an ultrasonic flaw detection device, which is an embodiment of the present invention will be described with reference to FIG. 1. An ultrasonic flaw detection device 1 is a device that performs ultrasonic flaw detection on a round bar RB manufactured by rolling a cast steel billet, by an ultrasonic flaw detection method using a water immersion flaw detection method (hereinafter, referred to as a water immersion method). The ultrasonic flaw detection device 1 includes an array probe 11 including a plurality of vibration elements 111, a probe head 12, a mounting table 13, a rotation drive device 14, a pulser 15, a receiver 16, an A/D converter 17, a recording device 18, a signal processing device 19, and a display device 20 as the main components.

The ultrasonic flaw detection device 1 according to the present invention includes a reception unit that receives a plurality of flaw signals via each of the vibration elements 111 provided in the array probe 11, while changing a positional relation between an inspection material and the array probe 11. In the ultrasonic flaw detection device 1 illustrated in FIG. 1 described above, the receiver 16, the A/D converter 17, and the recording device 18 correspond to the reception unit.

Moreover, the ultrasonic flaw detection device 1 according to the present invention includes a determination unit that determines a combined waveform group in an aperture synthesis process at each vibration element position of the inspection material, by calculating a ratio of the received sound pressure at each vibration element position with respect to the received sound pressure at the vibration element position where the received sound pressure from a flaw is maximized as a received sound pressure ratio, in each positional relation between the inspection material and the array probe 11, and on the basis of the calculated received sound pressure ratio. In addition, the ultrasonic flaw detection device 1 according to the present invention includes an inspection unit that inspects inside of the inspection material, by executing the aperture synthesis process on the received waveform at each of the vibration elements 111 obtained through multiple transmissions and receptions, using the delay time and the combined waveform group determined by the determination unit. In the ultrasonic flaw detection device 1 illustrated in FIG. 1 described above, the signal processing device 19 corresponds to the determination unit and the inspection unit.

The array probe 11 is disposed on a position separated from the round bar RB with a predetermined distance interposed therebetween, via water, which is the medium in the water immersion method. During the ultrasonic flaw detection, an ultrasonic signal is transmitted to the round bar RB, when the vibration elements 111 of the array probe 11 are excited by a pulse signal output from the pulser 15. The ultrasonic signal that propagates inside the round bar RB and that is reflected (hereinafter, referred to as a flaw signal) is received by the receiver 16 via the array probe 11.

In the present embodiment, to perform flaw detection at a high speed, the vibration elements 111 provided in the array probe 11 are simultaneously excited, and a plane wave is made incident on the round bar RB. However, the method of exciting the array probe 11 in the present invention is not limited to the simultaneous excitation, and the direction of the ultrasonic wave and the focal distance may be changed and transmitted, by shifting the excitation timing of the vibration elements 111.

The probe head 12 includes the array probe 11, and scans the round bar RB in the axis direction, by moving on the mounting table 13 disposed above the round bar RB. When the probe head 12 scans the round bar RB while the round bar RB is rotated in the circumferential direction, which is indicated by an arrow, by the rotation drive device 14, and when the receiver 16 receives a flaw signal, the ultrasonic flaw detection can be performed on the entire volume of the round bar RB. The rotation speed of the rotation drive device 14 and the scanning speed of the probe head 12 are set such that the ultrasonic flaw detection can be sufficiently performed on the entire volume of the round bar RB.

A flaw signal in an analog form received by the receiver 16 is converted to digital data by the A/D converter 17 in synchronization with the pulse signal output from the pulser 15, and is stored in the recording device 18. Consequently, the flaw signal in the entire volume of the round bar RB is stored in the recording device 18. The stored flaw signal is signal-processed by the signal processing device 19, and the results of the signal processing are displayed on the display device 20. The signal processing may be performed on the stored flaw signal anytime during the ultrasonic flaw detection, or may be performed after all the flaw signals are stored.

The signal processing device 19 determines the aperture synthesis process conditions as one signal processing. To determine the aperture synthesis process conditions, the signal processing device 19 calculates a received sound pressure ratio by calculating a received sound pressure ratio of a flaw signal, on the basis of a directional angle that is an angle between the center axis of the vibration element 111 and the ultrasonic wave propagation path, in two cross sections orthogonal to each other, for each of the vibration elements 111 provided in the array probe 11, and by using the two calculated received sound pressure ratios. The signal processing device 19 then determines an optimal combined waveform group for each ultrasonic flaw detection area, on the basis of the calculated received sound pressure ratio. Moreover, the signal processing device 19 executes an aperture synthesis process as one signal processing. The signal processing device 19 performs the aperture synthesis process using the flaw signals, according to the determined combined waveform group. Consequently, an internal flaw is detected by inspecting the inside of the round bar RB, and a flaw inside the round bar RB is detected.

An aperture synthesis process performed using a general array probe is performed on a signal obtained in a single transmission and reception. On the other hand, in the present embodiment, an aperture synthesis process is performed on the received waveform received by the array probe 11, while changing the position from the inspection material, by setting an optimal combined waveform group for each flaw detection area. Consequently, because the aperture synthesis process can be performed on a larger aperture area, the focusing effect of the ultrasonic beam is increased, and it is possible to improve the detection capability.

Ultrasonic Flaw Detection Method

Next, an ultrasonic flaw detection method according to the present embodiment will be described. The ultrasonic flaw detection method according to the present embodiment includes three steps of (I) a step of receiving, (II) a step of determining, and (III) a step of inspecting. These steps are executed in the order of (I) the step of receiving, (II) the step of determining, and (III) the step of inspecting.

At the step of receiving, the flaw signals are received at each of the vibration elements 111 provided in the array probe 11, while changing the positional relation between the inspection material and the array probe 11. At the step of receiving, a known reception method of a flaw signal by an ultrasonic probe may be used. For example, the step of receiving may be implemented by the operation of the receiver 16, the A/D converter 17, and the recording device 18 described above.

At the step of determining, the combined waveform group in the aperture synthesis process at each depth position of the inspection material is determined, by calculating a ratio of the received sound pressure at each vibration element position, with respect to the received sound pressure at the vibration element position where the received sound pressure from a flaw is maximized as a received sound pressure ratio, in the positional relation between the inspection material and each vibration element 111 provided in the array probe 11, and on the basis of the calculated received sound pressure ratio. The calculation of the combined waveform group at each depth position of the inspection material is the most important technique in the present invention. Consequently, the calculation method of the combined waveform group will be described in detail below.

In addition, at the step of determining, a delay time used in the aperture synthesis process will also be calculated. Moreover, in terms of improving the detection capability, it is preferable to calculate the combined width and the delay time for each flaw depth at the step of determining. A known method may be used as the aperture synthesis process for calculating the delay time. In the present embodiment, an example of calculating a propagation path of the transmitted ultrasonic signal in the inspection body, and determining a delay time on the basis of the calculated propagation path will be described below.

At the step of determining, it is preferable to calculate an S/N ratio change rate of a flaw signal by adding and averaging the received sound pressure ratio at each vibration element position, and determine the combined waveform group that makes the S/N ratio change rate be a predetermined value or more, as a flaw signal waveform used in the aperture synthesis process.

At the step of inspecting, the inside of an inspection material is inspected, by executing an aperture synthesis process on the received waveform at each of the vibration elements 111 obtained through multiple transmissions and receptions at the step of receiving, using the delay time and the combined waveform group determined at the step of determining, and on the basis of the results of the aperture synthesis process. A known method may be used for the aperture synthesis process performed at the step of inspecting. In the present embodiment, an example of performing a process in which the delay time, which is determined at the step of determining, is multiplied by a plurality of waveforms, which are included in the combined waveform group also determined at the step of determining, and is added, will be described below.

On the basis of the obtained results of the aperture synthesis process, it is possible to inspect the inside of the inspection material, and by understanding the state inside the inspection material, it is possible to perform flaw detection. For example, the state inside the inspection material to which a flaw detection can be performed, includes the intensity, the received time, and the like of a reflected signal from a flaw, the presence of a flaw, the position of the flaw, the size of the flaw, and the like. An output method of the obtained results of the aperture synthesis process may be appropriately determined according to the utilization purpose of the results and the like. However, it is preferable to output the obtained results in a waveform format or in an image format relative to the position (width direction, rolling direction, depth, thickness, and the like) because of high visibility.

With the ultrasonic flaw detection method according to the present invention, the detection capability can be improved, because the ratio (S/N ratio) of noise with respect to a flaw signal will be improved.

Determination of Aperture Synthesis Process Conditions

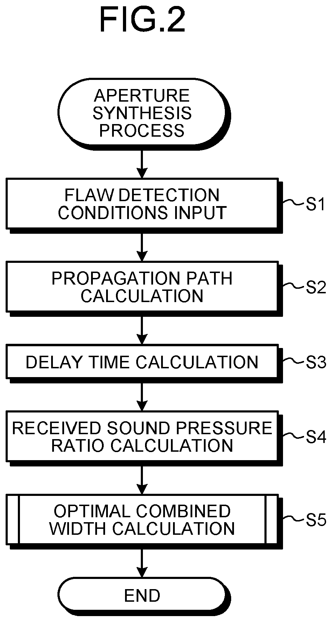

With reference to FIG. 2, an operation of the signal processing device 19 when an aperture synthesis process conditions, that is, the combined waveform group and the delay time are to be determined at the step of determining, will be described. In addition, at the step of determining, an example of a method of calculating the propagation path of an ultrasonic signal used for determining the delay time will be described. In this example, the propagation path is a propagation path of an ultrasonic signal in the inspection body. According to the needs, the propagation path may also be a propagation path of an ultrasonic signal in the inspection body and the medium. Moreover, hereinafter, an example of a method of calculating a received sound pressure ratio used for determining the combined waveform group will also be described.

FIG. 2 is a flowchart illustrating a flow of determining the aperture synthesis process conditions, which is the embodiment of the present invention. The aperture synthesis process conditions are not only determined before the ultrasonic flaw detection is performed, but may also be determined after the ultrasonic flaw detection is started on the basis of a value obtained during the ultrasonic flaw detection such as when the thickness of the round bar RB is measured using an ultrasonic signal.

The aperture synthesis process conditions are determined in the order of a flaw detection conditions input step (S1), a propagation path calculation step (S2), a delay time calculation step (S3), a received sound pressure ratio calculation step (S4), and an optimal combined width calculation step (S5). Each step where the round bar RB is used as the inspection body will be described in detail below.

In the process at step S1, the signal processing device 19 acquires the ultrasonic flaw detection conditions such as the size of the round bar RB, the size and arrangement interval of the vibration elements 111 provided in the array probe 11, the measuring pitch, the positional relation with the round bar RB, and an ultrasonic flaw detection area. The ultrasonic flaw detection conditions are not only acquired before the ultrasonic flaw detection is performed, but may also be acquired during the ultrasonic flaw detection or after the ultrasonic flaw detection. Consequently, the process at step S1 is finished, and the determination of the aperture synthesis process conditions proceeds to the process at step S2.

In the process at step S2, by using the ultrasonic flaw detection conditions acquired in the process at step S1, the signal processing device 19 calculates a propagation path of an ultrasonic signal that is made incident on the round bar RB from each of the vibration elements 111 provided in the array probe 11 and that passes through the assumed flaw position according to Snell's law (propagation path calculation process). The details of the propagation path calculation process will be described below. Consequently, the process at step S2 is finished, and the determination of the aperture synthesis process conditions proceeds to the process at step S3.

In the process at step S3, the signal processing device 19 calculates the delay time of other flaw signals with respect to the reference flaw signal at each received position (delay time calculation process). The details of the delay time calculation process will be described below. This completes the process at step S3, and the determination of the aperture synthesis process conditions proceeds to the process at step S4.

In the process at step S4, the signal processing device 19 calculates the received sound pressure ratio of a flaw signal in the positional relation between the round bar RB and each vibration element 111 provided in the array probe 11 (received sound pressure ratio calculation process). The details of the received sound pressure ratio calculation process will be described below. Consequently, the process at step S4 is finished, and the determination of the aperture synthesis process conditions proceeds to the process at step S5.

In the process at step S5, the signal processing device 19 determines the optimal combined waveform group in the aperture synthesis process at each depth position of the round bar RB, on the basis of the received sound pressure ratio calculated in the process at step S4. This completes the process at step S5, and a series of determinations of the aperture synthesis process conditions is finished.

Propagation Path Expression Process and Delay Time Expression Process

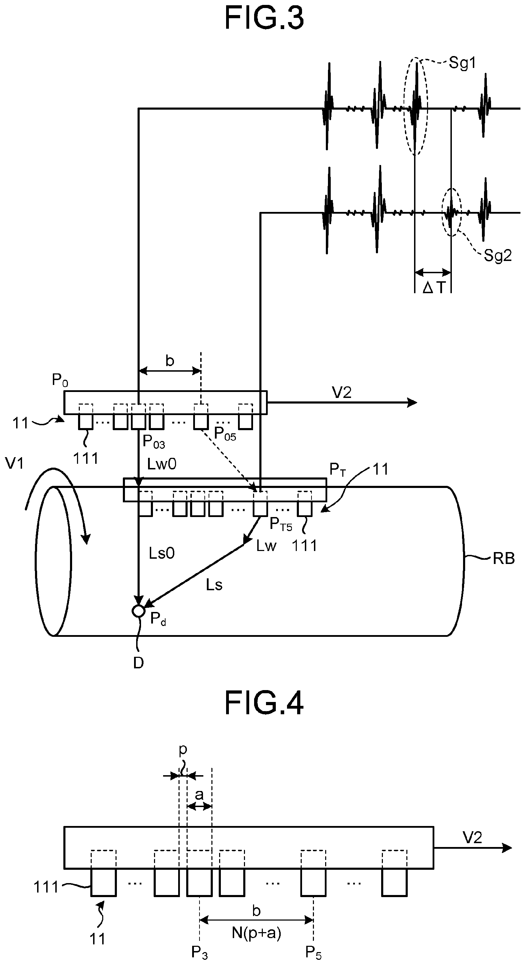

Next, with reference to FIG. 3 to FIG. 6, the propagation path calculation process at step S2 and the delay time calculation process at step S3 will be described in detail.

To acquire a flaw signal with a high S/N ratio by the aperture synthesis process, it is preferable to calculate the delay time of the flaw signals to be combined in an accurate manner. In particular, to perform ultrasonic flaw detection on a steel material having a curved surface shape such as the round bar RB, the propagation path of an ultrasonic signal changes significantly by the refraction of the curved surface. Thus, it is preferable to calculate the delay time of the flaw signals to be combined in an accurate manner.

Hence, in the present embodiment, on the basis of the coordinates of the array probe 11 and the assumed flaw position, the delay time is determined by calculating the propagation path of the ultrasonic signal that is made incident on the round bar RB from each vibration element 111 of the array probe 11 and that passes through the assumed flaw position, while satisfying Snell's law. That is, the delay time in the ultrasonic propagation path is determined, by calculating an ultrasonic propagation path and an incident point that satisfy Snell's law on one cross section, for each vibration element 111 provided in the array probe 11, and by calculating the position of the incident point and the ultrasonic propagation path that satisfies Snell's law on a surface that is orthogonal to the cross section.

FIG. 3 is a schematic diagram for explaining one aspect of a propagation path calculation process, which is the embodiment of the present invention. In FIG. 3, $P_0$ indicates the position of the array probe 11 at time t = 0, and $P_T$ indicates the position of the array probe 11 at time t = T.

FIG. 4 is a schematic diagram of an enlarged array probe 11. If the arrangement interval of the vibration elements 111 (element pitch) is referred to as p, and the width of the vibration element 111 is referred to as a, distance b between the vibration element 111 at position $P_3$ and the vibration element 111 at position $P_5$ that is separated from the vibration element 111 by N vibration elements is represented by the following expression (4). Moreover, as illustrated in FIG. 3, the vibration element 111 at position $P_{05}$ at time t = 0 moves to position $P_{T5}$ at time t = T.

$$b = N(p + a) \quad (4)$$

As illustrated in FIG. 3, the delay time $\Delta T$ is a delay in receiving a flaw signal Sg2 from a flaw D (position $P_d$) received by the vibration element 111 at position $P_{T5}$, with respect to the time when a flaw signal Sg1 from the flaw D (position $P_d$) is received by the vibration element 111 at position $P_{03}$. Moreover, V1 indicates the moving speed of the round bar RB in the circumferential direction, and V2 indicates the moving speed of the array probe 11 in the axis direction.

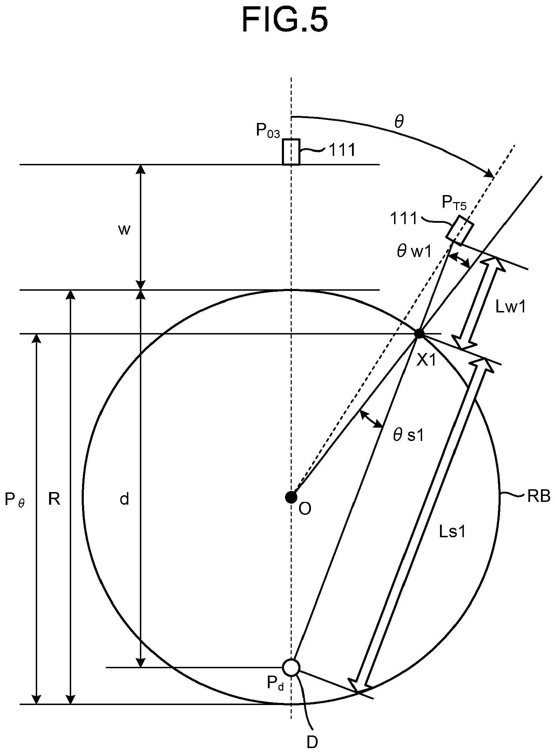

Furthermore, a part of the ultrasonic propagation path, which is from the vibration element 111 at position $P_{03}$ toward the flaw D (position $P_d$) in water distance, is referred to as w, and a part of the ultrasonic propagation path in steel is referred to as d (see FIG. 5). Similarly, a part of the ultrasonic propagation path, which is from the vibration element 111 at position $P_{T5}$ toward the flaw D (position $P_d$) in water distance, is referred to as Lw, and a part the ultrasonic propagation path in steel is referred to as Ls. However, in the propagation path, it is assumed that the refraction on a curved surface by Snell's law is taken into account.

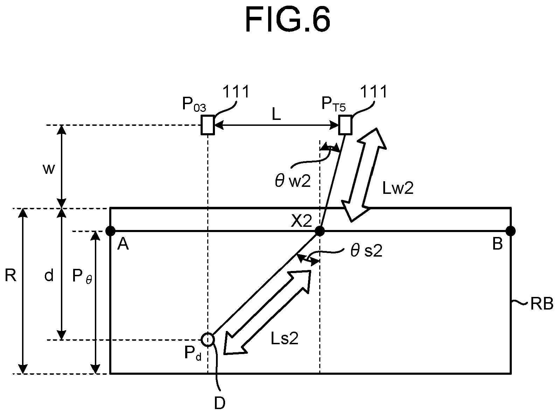

A change in the propagation path is derived individually for the cross section of the round bar RB in the circumferential direction, and the cross section of the round bar RB in the axis direction. FIG. 5 is a schematic diagram illustrating a change in the propagation path in the cross section of the round bar RB in the circumferential direction. FIG. 6 is a schematic diagram illustrating a change in the propagation path in the cross section of the round bar RB in the axis direction.

In FIG. 5, the moving angle $\theta$ in the rotational direction between the vibration element 111 at position $P_{03}$ and the vibration element 111 at position $P_{T5}$ is represented by the following expression (5). Moreover, a part of the ultrasonic propagation path, which is from the vibration element 111 at position $P_{T5}$ toward the flaw D (position $P_d$) on the cross section of the round bar RB in the circumferential direction, under the water is referred to as Lw1, and a part of the ultrasonic propagation path in steel is referred to as Ls1. If the sound speed in steel is referred to as Cs, and the sound speed under the water is referred to as Cw, because the ultrasonic propagation path follows Snell's law, the incident angle $\theta$w1 and the refraction angle $\theta$s1 satisfy the following expression (6). The incident point X1 on the circumference of the round bar under the conditions of the expression (6) is determined by performing a focusing calculation. $P_\theta$ indicates the height of the incident point X1 from the bottom portion of the round bar RB at the time.

$$d \times \theta = V2 \times T \quad (5)$$

$$\sin(\theta\, w1) \times Cs = \sin(\theta\, s1) \times Cw \quad (6)$$

In FIG. 6, an axis-direction moving amount L between the vibration element 111 at position $P_{03}$ and the vibration element 111 at position $P_{T5}$ is represented by the following expression (7). Moreover, a part of the ultrasonic propagation path, which is from the vibration element 111 at position $P_{T5}$ toward the flaw D (position $P_d$) on the cross section of the round bar RB in the axis direction, under the water is referred to as Lw2, a part of the ultrasonic propagation path in steel is referred to as Ls2, and the incident point is referred to as X2. The height of the incident point X2 from the bottom portion of the round bar RB coincides with the height $P_\theta$ of the incident point X1 from the bottom portion of the round bar RB determined on the cross section of the round bar RB in the circumferential direction. Because the ultrasonic propagation path in the steel follows Snell's law, the incident angle $\theta$w2 and the refraction angle $\theta$s2 satisfy the following expression (8). In this process, the incident point X2 on the line segment AB under the conditions of the expression (8) is determined by performing a focusing calculation.

$$L = b + V2 \times T \quad (7)$$

$$\sin(\theta\, w1) \times Cs = \sin(\theta\, s1) \times Cw \quad (8)$$

In this example, the cross section of the round bar RB in the circumferential direction and the cross section of the round bar RB in the axis direction are orthogonal to each other. Thus, the propagation path lengths Lw and Ls illustrated in FIG. 3 are represented by the following expression (9) and expression (10).

$$Lw = \sqrt{Lw1^2 + (Lw2 \times \sin\theta w2)^2} \quad (9)$$

$$Ls = \sqrt{Ls1^2 + (Ls2 \times \sin\theta s2)^2} \quad (10)$$

In the present embodiment, because the array probe 11 is simultaneously excited, plane waves with aligned phases are made incident on the steel in the billet axis direction. Thus, the delay time ΔT1 generated by the propagation path during transmission is represented by the following expression (11), the delay time ΔT2 generated by the propagation path during reception is represented by the following expression (12), and ΔT is represented by the following expression (13).

$$\Delta T1 = \frac{(Lw1 - w)}{Cw} - \frac{(Ls1 - d)}{Cs} \quad (11)$$

$$\Delta T2 = \frac{(Lw - w)}{Cw} - \frac{(Ls - d)}{Cs} \quad (12)$$

$$\Delta T = \Delta T1 + \Delta T2 \quad (13)$$

In this example, other flaw signals are combined by calculating the delay time of the flaw signals with respect to the reference flaw signal at each received position. Thus, random noise cancels each other out, and the S/N ratio of the flaw signal will be improved. In FIG. 3, when the flaw signal Sg1 is used as the reference, the flaw signal Sg2 is added by advancing the phase by the delay time ΔT. Consequently, random noise cancels each other out, and the flaw signals with aligned phases intensify each other. Thus, the S/N ratio of the flaw signal is increased than before the aperture synthesis process is performed. Moreover, by performing the aperture synthesis process by calculating the delay time at the position of each vibration element 111 provided in the array probe 11 and at each depth position of the round bar RB, it is possible to detect a flaw signal at a high S/N ratio, regardless of the depth of a flaw in the round bar RB.

Received Sound Pressure Ratio Expression Process and Optimal Combined Width Expression Process

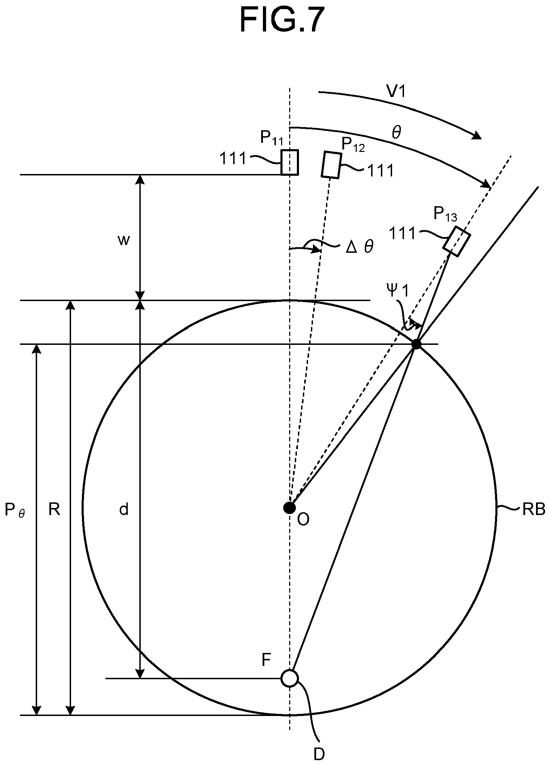

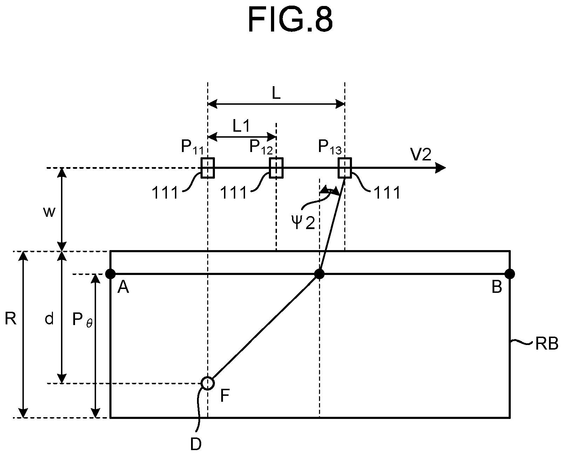

Next, with reference to FIG. 7 and FIG. 8, the received sound pressure ratio calculation process at step S4 and the optimal combined width calculation process at step S5 illustrated in FIG. 2 will be described in detail.

The intensity of the flaw signal at each vibration element 111 in the array probe 11 changes according to the positional relation between the vibration element 111 and the internal flaw. More specifically, in the far sound field, the intensity of the flaw signal is maximized, when there is a flaw on the center axis of the vibration element 111, and the intensity of the flaw signal is reduced as an angle between the center axis of the vibration element 111 and the propagation path of the ultrasonic wave that passes through the internal flaw is increased. To obtain a flaw signal with a high S/N ratio by the aperture synthesis process, the flaw signals must be added together within a range the flaw signals have sufficient intensity. If the flaw signals with low intensity are added together, the effect of improving the S/N ratio is reduced.

Moreover, because the ultrasonic signal output from the vibration element 111 diffuses and propagates, the sound pressure distribution is increased with an increase in the distance. In this process, if there is a flaw in the sound pressure distribution, a flaw signal with sufficient intensity can be obtained. That is, the combined width (the number of flaw signals to be added) with sufficient intensity is changed by the sound pressure distribution of the ultrasonic signal and the position of the flaw that moves in the sound pressure distribution. Thus, to obtain a flaw signal with a high S/N ratio by the aperture synthesis process, the combined waveform group must be set suitably based on the position of the internal flaw and the flaw detection conditions. Thus, in the present embodiment, a suitable combined waveform group is calculated for each depth position of an internal flaw, on the basis of the received sound pressure ratio of the flaw signal.

In the present embodiment, directional angles $\psi 1$ and $\psi 2$ of the ultrasonic signal on two cross sections orthogonal to each other, that is, the directional angle $\psi 1$ in the rotational direction and the directional angle $\psi 2$ in the axis direction at each position of the vibration element 111 are calculated, from the propagation path of the ultrasonic signal calculated by the propagation path calculation process. Then, a combined waveform group used in the aperture synthesis process is selected, by calculating a change in the received sound pressure ratio of the flaw signal at each position of the vibration element 111, when the array probe 11 has moved, selecting a combined waveform in the descending order from the one with the highest received sound pressure ratio, and from the relation between the number of combined waveforms and the S/N ratio change rate of the flaw signal.

First, calculation of the received sound pressure ratio R at the N-th vibration element 111 from the reference vibration element 111, when $m\Delta T$ has elapsed from the reference time will be described.

FIG. 7 is a schematic diagram illustrating a directional angle in the circumferential direction at each position of the vibration element 111. $P_{11}$ indicates the position of the vibration element 111 at the reference time (reference vibration element), $P_{12}$ indicates the position of the N-th vibration element 111 from the reference vibration element when the sampling time $\Delta T$ has elapsed from the reference time, and $P_{13}$ indicates the position of the N-th vibration element 111 from the reference vibration element when $m\Delta T$ has elapsed from the reference time. $\Delta T$ is represented by the following expression (14). The rotation angle $\Delta\theta$ and the rotation angle $\theta$ are represented by the following expression (15) and the expression (16).

$$\Delta T = 1/PRF \tag{14}$$

$$\Delta\theta = 2V1 \times \Delta T/R \tag{15}$$

$$\theta = m \times \Delta\theta \tag{16}$$

When the vibration element 111 provided in the array probe 11 is formed in a rectangular shape, the received sound pressure ratio $R_{\theta mN}$ can be represented by the following expression (17), expression (18), and expression (19), using the directional angle $\psi 1$. A parameter m in the expression (18) is a coefficient determined by the directional angles $\psi 1$ and $\psi 2$, and the probe width of the array probe 11. When the array probe 11 is not formed in a round shape or a rectangular shape, and is formed in a complicated shape, the received sound pressure ratio R may be determined using the results of experiments and physical analysis through a finite element method or the like. Moreover, if the flaw to be detected has a strong directivity, the received sound pressure ratio R is sometimes obtained by multiplying a reflection directivity function of the flaw by the expression (14) described above. In the present embodiment, the combined width is calculated using the received sound pressure ratio R calculated by the procedure described above. It is to be noted that the expression (17) is the same as the expression (1) described above except that "R1" in the expression (1) is replaced with "$R_{\theta mN}$".

$$R_{\theta mN} = Dc(\varphi 1) \tag{17}$$

$$Dc(\varphi) = \frac{\sin m}{m} \tag{18}$$

$$m = \frac{V1D}{F}\pi \times \sin\varphi \tag{19}$$

FIG. 8 is a schematic diagram illustrating a directional angle in the axis direction at each position of the vibration element 111. Similar to FIG. 7, $P_{11}$ indicates the position of the vibration element 111 at the reference time (reference vibration element), $P_{12}$ indicates the position of the N-th vibration element 111 from the reference vibration element when the sampling time $\Delta T$ has elapsed from the reference time, and $P_{13}$ indicates the position of the N-th vibration element 111 from the reference vibration element when $m\Delta T$ has elapsed from the reference time. An axis-direction moving amount L1 and the axis-direction moving amount L are represented by the following expression (20) and expression (21).

$$L1 = N(p + a) + V2\Delta T \quad (20)$$

$$L = N(p + a) + V2 \times m\Delta T \quad (21)$$

When the vibration element 111 provided in the array probe 11 is formed in a rectangular shape, the received sound pressure ratio $R_{LMN}$ can be represented by the expression (18), expression (19), and expression (22), using the directional angle ψ2. When the array probe 11 is not formed in a round shape or a rectangular shape, and is formed in a complicated shape, the received sound pressure ratio R may be determined using the results of experiments and physical analysis through a finite element method or the like. Moreover, if the flaw to be detected has a strong directivity, the received sound pressure ratio R is sometimes obtained by multiplying a reflection directivity function of the flaw by the expression (14) described above. In the present embodiment, the combined width is calculated using the received sound pressure ratio R calculated by the procedure described above. It is to be noted that the expression (22) is the same as the expression (2) described above except that "R2" in the expression (2) is replaced with "$R_{LmN}$" .

$$R_{LmN} = Dc(\varphi 2) \quad (22)$$

By using the received sound pressure ratios $R_{\theta m}$ and $R_{Lm}$ represented by the expression (17) and the expression (22) described above, the received sound pressure $R_{mN}$ at the N-th vibration element 111 from the reference vibration element when mΔT has elapsed from the reference time, is represented by the following expression (23) .

$$R_{mN} = R_{LmN} \times R_{\theta mN}{}^{2} \quad (23)$$

The received sound pressure ratio at the position of each vibration element 111 and at each time is calculated according to the method described above, and the arrangement of the received sound pressure ratios in the descending order from the high received sound pressure ratio is referred to as RA(x). In this process, a post-aperture synthesis received sound pressure ratio S obtained by adding the elements 1 to X of RA is represented by the following expression (24).

$$S = \sum_{n=1}^{X} \frac{RA(x)}{X} \quad (24)$$

If it is assumed that the noise becomes 1√X by adding and averaging the number of times of addition X, an S/N ratio improvement coefficient E, which is obtained after the aperture synthesis is performed, with respect to the S/N, which is obtained before the aperture synthesis is performed, at a reference assumed flaw position F is represented by the following expression (25).

$$E = 20 \log_{10}(\sqrt{X}S) \quad (25)$$

By performing aperture synthesis by setting the combined width $N_{max}$ that maximizes E by the expression (24) described above, it is possible to maximize the S/N of a flaw signal. Moreover, by performing the aperture synthesis process by determining $N_{max}$ that satisfies the expression (25) described above, it is possible to sufficiently improve the S/N of a flaw signal.

In the received sound pressure ratio calculation process described above, the vibration elements 111 of the array probe 11 are simultaneously excited, the transmission wave is assumed to be a plane wave, and only the reception directivity of the vibration element 111 is taken into account. However, in the ultrasonic flaw detection method and the ultrasonic flaw detection device 1 according to the present invention, the transmission wave is not only limited to the plane wave as described above, and a transmission wave with specific directivity and focal distance may also be used, by controlling the excitation timing of the vibration element 111. In this case, it is preferable to calculate the received sound pressure ratio by taking into account the directivity and distance characteristics of the transmission wave.

With the ultrasonic flaw detection method and the ultrasonic flaw detection device 1 according to the present embodiment described above, it is possible to execute the ultrasonic flaw detection with high detection capability and resolution capability at a high speed in every area in the inspection material, by performing aperture synthesis on a signal received by one or more vibration elements 111 provided in the array probe 11.

In the present embodiment, the array probe provided with the vibration elements, which is one aspect of the ultrasonic probe, has been used. However, the embodiment of the present invention is not limited thereto. That is, in the present invention, the ultrasonic probe including one or more vibration elements may be used. More specifically, the present invention exhibits similar advantageous effects, even if a single ultrasonic probe including a single vibration element is used, or a plurality of the ultrasonic probes including a single vibration element are used. The choice of which type of ultrasonic probe to use may be made appropriately by taking into account the performance and size of the ultrasonic probe, the state of the inspection material, the state of the flaw detection environment (space availability, for example), and the like.

Examples

Superior results of the ultrasonic flaw detection method according to the present invention will be described with reference to examples. In the present examples, the focusing effects of the ultrasonic beam when the method disclosed in Patent Literature 1, the method disclosed in Patent Literature 2, and the method in the present invention are used, are compared using the S/N ratio change rate, that is, the S/N ratio improved by the aperture synthesis process.

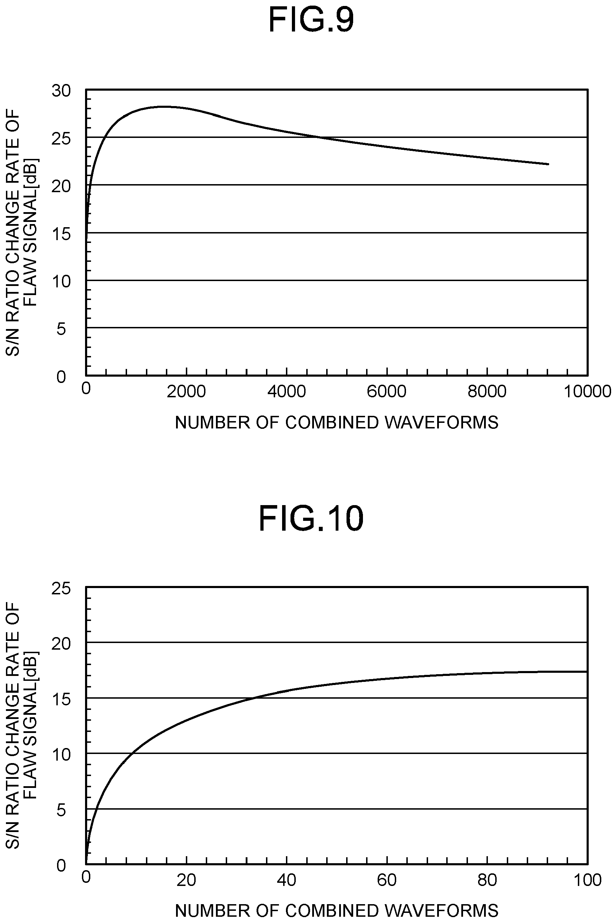

FIG. 9 is a diagram illustrating an example of a change in a relation between the number of combined waveforms and the S/N ratio change rate of a flaw signal according to the difference in the combined width. More specifically, FIG. 9 illustrates the results of calculating a relation between the number of combined waveforms and the S/N ratio change rate of a flaw signal, by detecting a flaw, which is at the internal depth 170 mm of a round bar steel with a diameter of φ175 mm, under the conditions of a frequency: 5 MHz, width of the vibration element in the circumferential direction: 12 mm, width of the vibration element in the axis direction: 1.8 mm, an interval between the vibration elements: 0.2 mm, the number of vibration elements: 61, repeating frequency: 1 kHz, rotation speed of round bar: 1100 mm/s, and scanning speed in the axis direction: 240 mm/s; and by performing aperture synthesis using the received waveform obtained by each vibration element of the array probe. However, the vibration elements of the array probe are aligned in the axis direction, and the combined waveform is selected in the descending order from the received waveform at the vibration element with the highest received sound pressure.

FIG. 10 illustrates the results of calculating a relation between the number of combined waveforms and the S/N ratio change rate of a flaw signal, by detecting a flaw, which is at the internal depth 170 mm of a round bar steel with a diameter of φ175 mm, using an array probe of a frequency: 5 MHz, width of the vibration element in the circumferential direction: 1.8 mm, width of the vibration element in the axis direction: 12 mm, an interval between the vibration elements: 0.2 mm, and the number of vibration elements: 121; and by performing aperture synthesis on the received waveform obtained by each vibration element of the array probe in the circumferential direction only. However, the vibration elements of the array probe are aligned in the circumferential direction, and the results are obtained by simulating the method disclosed in Patent Literature 2.

In the conventional method of FIG. 10, the maximum S/N ratio change rate: 17.4 dB is obtained at the number of combined waveforms: 97 waveforms. However, in the method of the present invention in FIG. 9, the maximum S/N ratio change rate: 28.3 dB is obtained at the combined waveforms: 1512 waveforms. In the present invention, the ultrasonic beam is focused in the axis direction of the round bar in addition to the circumferential direction of the round bar. Thus, compared to the conventional method, the sensitivity is improved by 10 dB and more, and the effectiveness of the present invention has been confirmed. Moreover, it has been confirmed that the S/N ratio change rate can be maximized, by appropriately selecting the combined waveform group through the present invention.

The embodiment to which the invention made by the present inventors is applied has been described. However, the present invention is not limited to the description and the drawings that form a part of the disclosure of the present invention according to the present embodiment. For example, the present invention may be applied as an inspection device that configures a manufacturing equipment line for a steel material, and a flaw may be detected by inspecting the inside of a steel material, which is manufactured by a manufacturing device, through the ultrasonic flaw detection device according to the present invention. Moreover, the present invention may also be applied as a step of inspecting included in the manufacturing method for a steel material, and may detect a flaw by inspecting the inside of a steel material manufactured at the step of manufacturing. At the step of detecting a flaw, a flaw inside a steel material is detected on the basis of the results of the aperture synthesis process at the step of inspecting, and the results such as the presence of a flaw, the position of the flaw, the size of the flaw, and the like are obtained. With the manufacturing equipment line for a steel material and the manufacturing method for a steel material such as above, it is possible to manufacture a steel material with a good yield.

Furthermore, quality assurance for a steel material may also be performed by applying the present invention to a quality assurance method for a steel material, and detecting a flaw by inspecting the inside of a steel material. More specifically, it is possible to perform quality assurance for a steel material by detecting a flaw inside a steel material at the step of detecting a flaw in the present invention, and from the results of flaw detection obtained at the step of detecting a flaw. At the step of detecting a flaw, a flaw inside a steel material is detected on the basis of the results of the aperture synthesis process at the step of inspecting, and results such as the presence of a flaw, the position of the flaw, the size of the flaw, and the like are obtained. At the following step of quality assuring, on the basis of the results relating to the presence of a flaw, the position of the flaw, and the size of the flaw, which are obtained at the step of detecting a flaw, the quality of the steel material is assured by determining whether the manufactured steel material satisfies the references specified in advance. With such a quality assurance method for a steel material, it is possible to provide a high quality steel material. In this manner, the other embodiments, examples, operating technologies, and the like that may be made by those skilled in the art on the basis of the present embodiment are all included in the scope of the present invention.

Reference Signs List

| | |
|---|---|
| 1 | ultrasonic flaw detection device |
| 11 | array probe |
| 111 | vibration element |
| 12 | probe head |
| 13 | mounting table |
| 14 | rotation drive device |
| 15 | pulser |
| 16 | receiver |
| 17 | A/D converter |
| 18 | recording device |
| 19 | signal processing device |
| 20 | display device |
| RB | round bar |

## Claims

**1.** An ultrasonic flaw detection method for inspecting an inside of an inspection material, the method comprising:

transmitting an ultrasonic signal from an ultrasonic probe to the inspection material;
receiving the ultrasonic signal reflected inside the inspection material via the ultrasonic probe as a flaw signal;
a receiving step of receiving a plurality of the flaw signals via one or more vibration elements provided in the ultrasonic probe, while changing a positional relation between the inspection material and the ultrasonic probe;
a determining step of

calculating a ratio of a received sound pressure at each vibration element position with respect to a received sound pressure at a vibration element position where a received sound pressure from a flaw is maximized as a received sound pressure ratio in each positional relation between the inspection material and the vibration element, and
determining a combined waveform group in an aperture synthesis process at each vibration element position of the inspection material based on the calculated received sound pressure ratio; and

an inspecting step of inspecting the inside of the inspection material by executing the aperture synthesis process on a received waveform at the vibration element obtained through multiple transmissions and receptions, using the combined waveform group determined at the step of determining, and delay time of the flaw signals.

**2.** The ultrasonic flaw detection method according to claim 1, wherein the determining step includes a step of:

calculating an S/N ratio change rate of a flaw signal by adding and averaging the received sound pressure ratio at each vibration element position; and
determining a combined waveform group that makes the S/N ratio change rate be a predetermined value or more, as a flaw signal waveform used in the aperture synthesis process.

**3.** The ultrasonic flaw detection method according to claim 1 or 2, wherein the determining step includes a step of:

calculating the received sound pressure ratio based on directional angles each of which is an angle between a center axis of the vibration element and an ultrasonic propagation path in each of two cross sections orthogonal to each other, for the vibration element; and
calculating a received sound pressure ratio by using two of the calculated received sound pressure ratios.

**4.** The ultrasonic flaw detection method according to any one of claims 1 to 3, wherein the determining step includes a step of determining the delay time in ultrasonic propagation paths, by calculating an ultrasonic propagation path and an incident point that satisfy Snell's law on one cross section, for the vibration element, and by calculating a position of the incident point and an ultrasonic propagation path that satisfies Snell's law on a surface that is orthogonal to the cross section.

**5.** The ultrasonic flaw detection method according to any one of claims 1 to 3, wherein the determining step includes a step of calculating received sound pressure ratios R1 and R2 using directional angles $\psi 1$ and $\psi 2$ of an ultrasonic signal on two cross sections orthogonal to each other, using following expression (1), expression (2), and expression (3), when the vibration element is formed in a rectangular shape,
where a parameter m in the following expression (3) is a coefficient determined by the directional angles $\psi 1$ and $\psi 2$ and a width of the vibration element:

$$R1 = Dc(\varphi 1) \quad (1)$$

$$R2 = Dc(\varphi 2) \quad (2)$$

$$Dc(\varphi) = \frac{\sin m}{m} \quad (3).$$

**6.** An ultrasonic flaw detection device for inspecting an inside of an inspection material by transmitting an ultrasonic signal from an ultrasonic probe to the inspection material, and by receiving the ultrasonic signal reflected inside the inspection material via the ultrasonic probe as a flaw signal, the ultrasonic flaw detection device comprising:

a reception unit configured to receive a plurality of the flaw signals via one or more vibration elements provided in the ultrasonic probe, while changing a positional relation between the inspection material and the ultrasonic probe;
a determination unit configured to

calculate a ratio of a received sound pressure at each vibration element position with respect to a received sound pressure at a vibration element position where a received sound pressure from a flaw is maximized as a received sound pressure ratio in each positional relation between the inspection material and the vibration element, and
determine a combined waveform group in an aperture synthesis process at each vibration element position of the inspection material based on the calculated received sound pressure ratio; and
an inspection unit configured to inspect the inside of the inspection material by executing the aperture synthesis process on a received waveform at the vibration element obtained through multiple transmissions and receptions, using the combined waveform group determined by the determination unit, and delay time of the flaw signals.

**7.** A manufacturing equipment line for a steel material, the manufacturing equipment line comprising:

a manufacturing device configured to manufacture a steel material; and
the ultrasonic flaw detection device according to claim 6 configured to inspect the inside of the steel material manufactured by the manufacturing device.

**8.** A manufacturing method for a steel material, the manufacturing method comprising:

a manufacturing step of manufacturing a steel material; and
a detecting step of detecting a flaw inside the steel material manufactured at the manufacturing step, using the ultrasonic flaw detection method according to any one of claims 1 to 5.

**9.** A quality assurance method for a steel material, the quality assurance method comprising:

a detecting step of detecting a flaw inside a steel material, using the ultrasonic flaw detection method according to any one of claims 1 to 5; and
a quality assuring step of quality assuring the steel material from a flaw detection result obtained at the detecting step.

FIG.1

15
PULSER
16
RECEIVER
17
A/D CONVERTER
20
DISPLAY DEVICE
18
RECORDING DEVICE
19
SIGNAL PROCESSING DEVICE
13
12
111
11
RB
14
14

FIG.2

APERTURE SYNTHESIS PROCESS
FLAW DETECTION CONDITIONS INPUT
S1
PROPAGATION PATH CALCULATION
S2
DELAY TIME CALCULATION
S3
RECEIVED SOUND PRESSURE RATIO CALCULATION
S4
OPTIMAL COMBINED WIDTH CALCULATION
S5
END

FIG.3

Sg1
Sg2
ΔT
b
P0
V2
11
111
P03
P05
Lw0
V1
PT
11
PT5
Ls0
Lw
111
RB
Ls
Pd
D

FIG.4

p
a
V2
111
11
b
N(p+a)
P3
P5

FIG.5

P03
111
θ
PT5
111
θ w1
w
Lw1
X1
θ s1
Pθ
R
d
O
RB
Ls1
Pd
D

# FIG.6

111
111
P03
PT5
L
w
θw2
Lw2
X2
A
B
θs2
R
d
Pθ
RB
Ls2
Pd
D

# FIG.7

V1
θ
P11
P12
P13
111
111
111
Δθ
w
Ψ1
Pθ
R
d
O
RB
F
D

FIG.8

L
L1
P11
P12
P13
V2
111
111
111
w
Ψ2
R
d
Pθ
A
B
RB
F
D

# FIG.9

S/N RATIO CHANGE RATE OF FLAW SIGNAL[dB]
30
25
20
15
10
5
0
0
2000
4000
6000
8000
10000
NUMBER OF COMBINED WAVEFORMS

# FIG.10

S/N RATIO CHANGE RATE OF FLAW SIGNAL[dB]
25
20
15
10
5
0
0
20
40
60
80
100
NUMBER OF COMBINED WAVEFORMS

**INTERNATIONAL SEARCH REPORT**

International application No. PCT/JP2019/023486

A. CLASSIFICATION OF SUBJECT MATTER
Int. Cl. G01N29/50(2006.01)i

According to International Patent Classification (IPC) or to both national classification and IPC

B. FIELDS SEARCHED

Minimum documentation searched (classification system followed by classification symbols)
Int. Cl. G01N29/50

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 5-172789 A (CHUBU ELECTRIC POWER CO., INC.) 09 July 1993, paragraphs [0011]-[0016], fig. 4, 5 (Family: none) | 1, 6-9<br>2-5 |
| Y<br>A | JP 2012-22013 A (HITACHI, LTD.) 02 February 2012, paragraphs [0031]-[0076] & US 2006/0219013 A1, paragraphs [0051]-[0096] | 1, 6-9<br>2-5 |
| A | US 4375167 A (NUSBICKEL, Jr. et al.) 01 March 1983 (Family: none) | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.08.2019 | 27.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005233874 A
- JP 2013156277 A